# EUROPÄISCHE PATENTSCHRIFT

(11) **EP 2 151 901 B1**
(45) Veröffentlichungstag und Bekanntmachung des Hinweises auf die Patenterteilung: **16.08.2017**
(21) Anmeldenummer: 09009359.2
(22) Anmeldetag: 18.07.2009
(51) Int. Cl.: H02B 1/46, H02B 1/30

(54) **Verteilerkasten**
Distribution box
Boîtier de distribution

(30) Priorität: 05.08.2008 DE 102008036373
(43) Veröffentlichungstag der Anmeldung: 10.02.2010
(73) Patentinhaber: Hager Electro GmbH & Co. KG, 66131 Saarbrücken (DE)
(72) Erfinder: Theuer, Markus, 66131 Saarbrücken (DE); Prat, Julio Milà, 08402 Granollers (ES); Núnez, Sergi Tornos, 08520 Les Franqueses del Vallès (ES)
(74) Vertreter: Nuss, Laurent

(56) Entgegenhaltungen:
- EP-A2- 1 385 185
- WO-A1-2006/042591
- DE-A1- 3 303 764

## Beschreibung

Die Erfindung betrifft einen Verteilerkasten mit einer länglichen Öffnung in einer Vorderwand, welche Zugriff auf Schaltbetätigungselemente in dem Verteilerkasten angeordneter Schaltgeräte ermöglicht, wobei der Verteilerkasten ein durch ein transparentes, am Verteilerkasten parallel zur Längsseite der Öffnung anbringbares Halteteil umfasst, das auf seiner dem Verteilerkasten zugewandten Seite Einrichtungen für die Verbindung mit dem Verteilerkasten und Einrichtungen für die Aufnahme eines Beschriftungsträgers aufweist.

Die DE 33 03764 beschreibt einen solchen Verteilerkasten, in dem Bereiche zur Aufnahme von Automaten, Sicherungen, Fl-Schaltern und von Beschriftungsfeldern vorgesehen sind. Die Beschriftungsfelder, die an einer keilförmigen Aufnahmeeinrichtung eingerastet werden, sind im Kleinverteilerkasten unterhalb der Automaten, Sicherungen, Fl-Schaltern angeordnet.

Aus der EP 1 385 185 A2 geht eine Beschriftungsfeldbeleuchtung eines aus einer Gerätedose mit Geräteeinsatz und Gerätedeckel aufgebauten elektrischen Installationsgerätes hervor. Längs einer Seitenwandung des Gerätedeckels erstreckt sich ein Beschriftungsfeld mit Lichtleiterkammer, keilförmigem Lichtleiter, Beschriftungsfolie und Abdeckschild. In einer eckseitigen Tasche der Gerätedose ist eine Beleuchtungseinheit montiert, deren Lichtquelle direkt in eine stirnseitige Lichtleitereintrittsfläche des Lichtleiters strahlt.

Die WO 2006042591 A1 beschreibt ein Gehäuse oder eine rahmenartige Aufnahmeeinheit für elektronische oder elektrische Komponenten mit einem eine Öffnung umgebenden Rahmen, einer in der Frontseite mindestens eines Profils in Längsrichtung ausgebildeten Aufnahme und einer in diese eingesetzten Beschriftungsleiste, die einen Haltestreifen trägt, welcher eine zur Frontseite liegende Sichtfläche bildet. Die Beschriftungsleiste ist auf ihren beiden Längsseiten mit Rasten versehen, die zum Eingreifen in Rahmenprofile vorgesehen sind.

Der Erfindung liegt die Aufgabe zugrunde, die Anbringung solcher Kennzeichnungen an Verteilerkästen zu erleichtern.

Ein diese Aufgabe lösender Verteilerkasten nach der Erfindung ist dadurch gekennzeichnet, dass die Verbindungseinrichtungen lediglich an einem der Öffnung abgewandten Längsrand des Halteteils vorgesehen sind.

Vorteilhaft lässt sich das mit einem oder mehreren Beschriftungsträgern bestückte Halteteil bequem an der Vorderseite des Verteilerkastens anbringen. Das transparente Halteteil kann zur Anbringung wahlweise auf der oberen oder unteren Längsseite der Öffnung vorgesehen sein. Alternativ könnten zwei Halteteile zur Anbringung sowohl oberhalb als auch unterhalb der Öffnung zur Verfügung stehen.

In einer bevorzugten Ausführungsform der Erfindung weist das plattenartige Halteteil einen in Richtung zu dem Verteilerkasten vorstehenden Verbindungssteg auf, über den es in eine zu der Öffnung parallele Nut in der Vorderwand des Verteilerkastens auf den Verteilerkasten aufsteckbar ist. So lässt sich eine stabile, aber lösbare Verbindung zwischen dem Halteteil und dem Verteilerkasten herstellen. Änderungen von Beschriftungen sind mit geringem Aufwand möglich.

In der Nut können die Klemmkraft zwischen dem Verbindungssteg und der Nut verstärkende Vorsprünge gebildet sein.

Vorzugsweise ist der Verbindungssteg an dem der Öffnung fernen Längsrand des Halteteils angeordnet und die Nut verläuft dementsprechend im Abstand zu der Öffnung.

In einer bevorzugten Ausführungsform der Erfindung ist der Verbindungssteg durch eine U-förmige, vorzugsweise federnde Abbiegung des Halteteils gebildet.

Ferner ist in der bevorzugten Ausführungsform der Erfindung das Halteteil entsprechend einer Neigung der an die Öffnung angrenzenden Vorderwand des Verteilerkastens zu der Öffnung hin geneigt. Entsprechend weist der plattenartige Hauptteil des Halteteils eine Neigung zu dem Verbindungssteg und damit zur Steckrichtung auf, wodurch eine gewisse Verhakung des Halteteils an der Vorderwand des Verteilerkastens erreicht wird, welche zur Stabilisierung der Verbindung zwischen dem Halteteil und der Vorderwand beiträgt.

Vorzugsweise umfassen die Einrichtungen zur Aufnahme des Beschriftungsträgers wenigstens eine U-förmige Randabwinklung, die eine den Rand des Beschriftungsträgers aufnehmende Tasche bildet.

Vorzugsweise geht die U-förmige Randabwinklung über eine weitere Abwinklung in die obengenannte U-förmige Abbiegung über.

In weiterer Ausgestaltung der Erfindung ist am Rand der Nut ein von der Vorderwand des Verteilerkastens vorstehende Randwulst gebildet, der als Anschlag für einen Beschriftungsträger dienen kann.

Vorzugsweise sind die Nut und/oder der Randwulst frei von Kanten. Eine solche Nut fügt sich optisch problemlos in die Vorderwand des Verteilerkastens ein. Auf der nicht für die Anbringung des Halteteils ausgewählten Seite sind keine, den optischen Eindruck beeinträchtigende Befestigungseinrichtungen für das Halteteil erkennbar.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: einen Verteilerkasten nach der Erfindung,
- Fig. 2: eine Detaildarstellung des Verteilerkastens von Fig. 1, und
- Fig. 3 bis 5: weitere Detaildarstellungen des Verteilerkastens von Fig. 1, welche die verschiedenen Anbringungsmöglichkeiten erfindungsgemäßer Halteteile am Verteilerkasten erläutern.

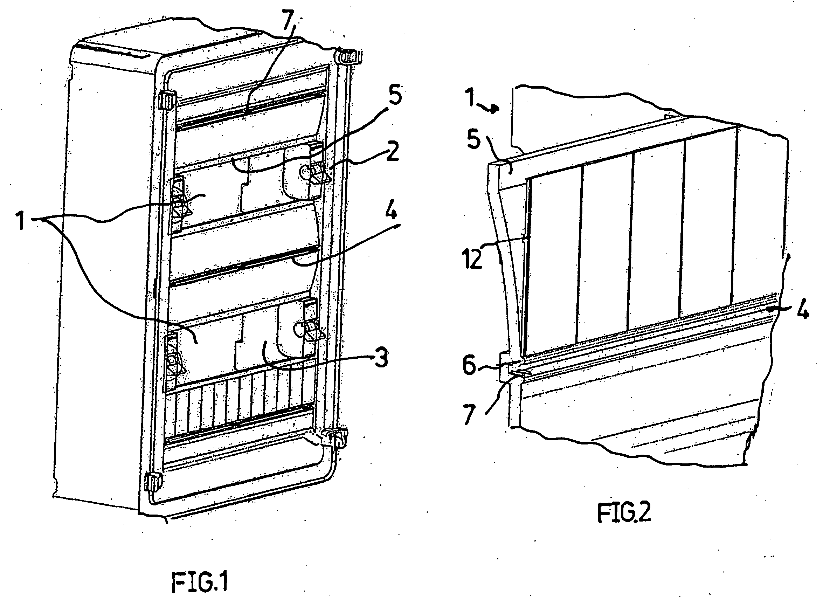

Ein in Fig. 1 gezeigter Verteilerkasten weist in seiner Vorderwand zwei längliche öff-nungen 1 auf. Die Öffnungen ermöglichen den Zugriff auf Schalthebel 2 in dem verteilerkasten untergebrachter Schaltgeräte 3. Solche Schaltgeräte können auf nicht gezeigten, im Verteilerkasten hinter den Öffnungen 1 angeordneten Hutprofilschienen aufgereiht sein.

Parallel zu beiden Längsseiten beider Öffnungen 1 erstreckt sich in der Vorderwand des Verteilerkastens jeweils im Abstand zur Öffnung eine Nut 4. Von der Nut 4 an ist die Vorderwand des Verteilerkastens, bis auf einen kurzen, unmittelbar an die Öffnung angrenzenden Randabschnitt 5, zu der Öffnung hin geneigt.

Wie insbesondere Fig. 2 erkennen lässt, weist die Nut 4 von der Vorderwand des Verteilerkastens vorstehende Randwülste 6 auf. In der Längsmitte und an den Enden der Nut 4 stehen von der unteren Nutenwand jeweils Vorsprünge 7 vor.

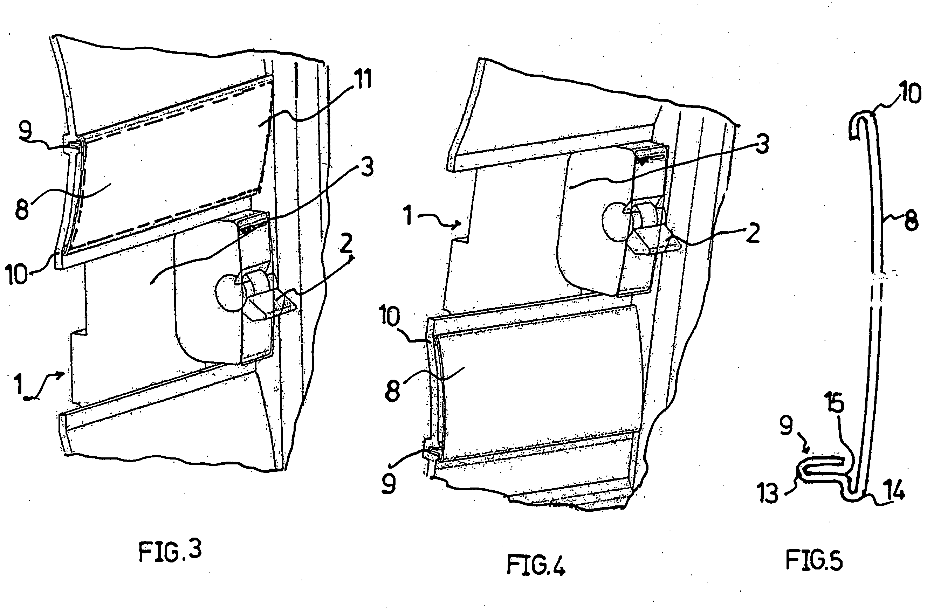

Wie aus den Fig. 3 und 4 hervorgeht, lässt sich an dem Verteilerkasten parallel zu den Längsseiten der Öffnungen 1 jeweils ein Halteteil 8 anbringen, das transparent ist und auf seiner dem Verteilerkasten zugewandten Seite nahe seinem der Öffnung 1 abgewandten Längsrand einen Steg 9 aufweist. Mit dem Steg 9, der, wie insbesondere Fig. 5 erkennen lässt, in dem betreffenden Ausführungsbeispiel durch eine U-förmige Abbiegung 13 gebildet ist, greift das Halteteil 8 in die Nut 4 ein.

Die Abbiegung 13 geht über eine weitere Abwinklung 15 in eine U-förmige Randabwinklung 14 über.
An seinem dem Steg 9 bzw. der Randabwinklung 14 fernen Rand ist an dem Halteteil 8 eine U-förmige Randabwinklung 10 gebildet.

Die U-förmigen Randabwinklungen 10 und 14 können zur Aufnahme einer Beschriftungströgerkarte 11 dienen, wie sie in Fig. 3 gezeigt ist. Das Halteteil 8 mit der Beschriftungsträgerkarte 11 lässt sich wahlweise auf der oberen oder unteren Seite der Öffnung 1 am Verteilerkasten anbringen, indem der federnde Steg 9 in die betreffende Nut 4 eingesteckt wird, wobei die Vorsprünge 7 für eine Verstärkung der Klemmkraft sorgen. Die in den Randabwinklungen 10 und 14 gehaltene Beschriftungsträgerkarte 11 wird dann im Übrigen zwischen dem Halteteil 8 und der Vorderwand des Verteilerkastens gehalten. Eine Beschriftung, welche vorzugsweise die jeweiligen Stromkreise kennzeichnet, ist durch das transparente Halteteil 8 hindurch sichtbar.

Der vorstehende Steg 9 ist zum übrigen, plattenartigen Hauptteil des Halteteils 8 geneigt, so dass sich das aufgesteckte Halteteil parallel zu der zur Öffnung 1 hin abfallenden Vorderwand des Verteilerkastens erstreckt. Diese hakenartige Abwinklung des Halteteils trägt zur weiteren Stabilisierung der Steckverbindung mit dem Verteilerkasten bei. Andererseits ist die Verbindung zwischen dem Halteteil 8 und dem Verteilerkasten bequem lösbar.

Fig. 2 zeigt eine Verwendung des Verteilerkastens von Fig. 1 ohne das Halteteil 8. Dort gezeigte Beschriftungsträgerkarten 12 sind selbstklebend und lassen sich auf die zur Öffnung 1 hin geneigte Fläche der Vorderwand des Verteilerkastens aufkleben, wobei zur genauen Ausrichtung der Karten der vorstehende, einen Anschlag bildende Randwulst 6 dient.

## Patentansprüche

1. Verteilerkasten mit einer länglichen Öffnung (1) in einer Vorderwand, welche Zugriff auf Schaltbetätigungselemente (2) in dem Verteilerkasten angeordneter Schaltgeräte (3) ermöglicht, wobei der Verteilerkasten ein durch ein transparentes, am Verteilerkasten parallel zur Längsseite der Öffnung (1) anbringbares Halteteil (8) umfasst, das auf seiner dem Verteilerkasten zugewandten Seite Einrichtungen (9) für die Verbindung mit dem Verteilerkasten und Einrichtungen (10,14) für die Aufnahme eines Beschriftungsträgers (11) aufweist,
**dadurch gekennzeichnet,**
**dass** die Verbindungseinrichtungen (9) lediglich an einem der Öffnung abgewandten Längsrand des Halteteils (8) vorgesehen sind.

2. Verteilerkasten nach Anspruch 1,
**dadurch gekennzeichnet,**
**dass** das Halteteil (8) einen in Richtung zu dem Verteilerkasten vorstehenden Verbindungssteg (9) aufweist, über den das Halteteil (8) in eine zu der Öffnung (1) parallele Nut (4) auf den Verteilerkasten aufsteckbar ist.

3. Verteilerkasten nach Anspruch 2,
**dadurch gekennzeichnet,**
**dass** der Verbindungssteg (9) an dem der Öffnung (1) fernen Längsrand des Halteteils (8) und die Nut (4) entsprechend im Abstand zu der Öffnung (1) verläuft.

4. Verteilerkasten nach Anspruch 2 oder 3,
**dadurch gekennzeichnet,**
**dass** der Verbindungssteg (9) durch eine U-förmige, vorzugsweise federnde Abbiegung (13) des Halteteils (8) gebildet ist.

5. Verteilerkasten nach einem der Ansprüche 2 bis 4,
**dadurch gekennzeichnet,**
**dass** in der Nut (4) die Klemmkraft zwischen der Nut (4) und dem Verbindungssteg (9) verstärkende Vorsprünge (7) gebildet sind.

6. Verteilerkasten nach einem der Ansprüche 1 bis 5,
**dadurch gekennzeichnet,**
**dass** das Halteteil (8) entsprechend einer Neigung der an die Öffnung (1) angrenzenden Vorderwand des Verteilerkastens zu der Öffnung (1) hin geneigt ist.

7. Verteilerkasten nach einem der Ansprüche 1 bis 6,
**dadurch gekennzeichnet,**
**dass** das Halteteil (8) wahlweise auf einer der beiden Längsseiten der Öffnung (1) am Verteilerkasten anbringbar ist oder dass zwei, an beiden Längsseiten der Öffnung (1) am Verteilerkasten anbringbare Halteteile (8) vorgesehen sind.

8. Verteilerkasten nach einem der Ansprüche 1 bis 7,
**dadurch gekennzeichnet,**
**dass** die Einrichtungen zur Aufnahme des Beschriftungsträgers (11) wenigstens eine U-förmige Randabwinklung (10,14) umfassen.

9. Verteilerkasten nach Anspruch 8,
**dadurch gekennzeichnet,**
**dass** die U-förmige Randabwinklung (14) über eine weitere Abwinklung (15) in die U-förmige Abbiegung (13) übergeht.

10. Verteilerkasten nach einem der Ansprüche 1 bis 9,
**dadurch gekennzeichnet,**
**dass** am Rand der Nut (4) ein von der Vorderwand des Verteilerkastens vorstehender Randwulst (6) gebildet ist.

11. Verteilerkasten nach einem der Ansprüche 1 bis 10,
**dadurch gekennzeichnet,**
**dass** die Nut (4) und/oder der Randwulst (6) frei von Kanten ist.

## Claims

1. Distribution box with an elongated opening (1) in a front wall, which allows access to switch activating elements (2) of switching devices (3) arranged in the distribution box, wherein the distribution box comprises a transparent holding element (8) attachable to the distribution box parallel to the longitudinal side of the opening (1), which holding element on its side facing the distribution box comprises devices (9) for connecting with the distribution box and devices (10, 19) for mounting a labelling bracket,
**characterised in that** the connecting devices (9) are provided only on a longitudinal edge of the holding element (8) facing away from the opening.

2. Distribution box according to claim 1,
**characterised in that**
the holding element (8) comprises a connecting web (9) projecting in the direction of the distribution box, by which connection web the holding element (8) can be fitted on the distribution box into a groove (4) parallel to the opening (1).

3. Distribution box according to claim 2,
**characterised in that**
the groove (4) and, on the longitudinal edge of the holding element (8) remote from the opening (1), the connecting web (9) is arranged at a suitable distance from the opening (1).

4. Distribution box according to claim 2 or 3,
**characterised in that**
the connecting web (9) is formed by a U-shaped, preferably resilient bend (13) of the holding element (8).

5. Distribution box according to any one of claims 2 to 4,
**characterised in that**
in the groove (4) projections (7) are formed reinforcing the clamping force between the groove (4) and the connecting web (9).

6. Distribution box according to any one of claims 1 to 5,
**characterised in that**
the holding element (8) is inclined relative to the opening (1) according to an inclination of the front wall of the distribution box adjoining the opening (1).

7. Distribution box according to any one of claims 1 to 6,
**characterised in that**
the holding element (8) can be attached optionally onto one of the two longitudinal sides of the opening (1) on the distribution box or **in that** two holding elements (8) are provided which can be attached onto both longitudinal sides of the opening (1) on the distribution box.

8. Distribution box according to any one of claims 1 to 7,
**characterised in that**
the devices for mounting the labelling bracket (11) comprise at least one U-shaped edge angulation (10, 14).

9. Distribution box according to claim 8,
**characterised in that**
the U-shaped edge angulation (14) passes through a further angulation (15) into the U-shaped bend (13).

10. Distribution box according to any one of claims 1 to 9,
**characterised in that**
on the edge of the groove (4) an edge beading (6) is formed projecting from the front wall of the distribution box.

11. Distribution box according to any one of claims 1 to 10,
**characterised in that**
the groove (4) and/or the edge beading (6) is free of edges.

## Revendications

1. Boîtier de distribution doté d'une ouverture oblongue (1) dans une paroi avant, ouverture qui permet d'accéder à des éléments (2) d'actionnement de commutation d'appareils de commutation (3) disposés dans le boîtier de distribution, sachant que le boîtier de distribution comprend un élément de maintien transparent (8), pouvant être installé sur le boîtier de distribution parallèlement au côté longitudinal de l'ouverture (1), élément qui présente, sur son côté tourné vers le boîtier de distribution, des moyens (9) pour la liaison avec le boîtier de distribution et des moyens (10, 14) pour la réception d'un support d'inscription (11),
**caractérisé en ce que** les moyens de liaison (9) sont prévus uniquement sur un bord longitudinal de l'élément de maintien (8) qui est opposé à l'ouverture.

2. Boîtier de distribution selon la revendication 1, **caractérisé en ce que** l'élément de maintien (8) présente une branche de liaison (9) faisant saillie en direction du boîtier de distribution, branche au moyen de laquelle l'élément de maintien (8) peut être emmanché sur le boîtier de distribution dans une rainure (4) parallèle à l'ouverture (1).

3. Boîtier de distribution selon la revendication 2, **caractérisé en ce que** la branche de liaison (9) s'étend sur le bord longitudinal de l'élément de maintien (8) qui est éloigné de l'ouverture (1), et la rainure (4) s'étend d'une manière correspondante à distance de l'ouverture (1).

4. Boîtier de distribution selon la revendication 2 ou 3, **caractérisé en ce que** la branche de liaison (9) est formée par une courbure (13) en forme de U, de préférence à effet de ressort, de l'élément de maintien (8).

5. Boîtier de distribution selon l'une des revendications 2 à 4, **caractérisé en ce que** des saillies (7) renforçant la force de serrage entre la rainure (4) et la branche de liaison (9) sont formées dans la rainure (4).

6. Boîtier de distribution selon l'une des revendications 1 à 5, **caractérisé en ce que** l'élément de maintien (8) est incliné en direction de l'ouverture (1) d'une manière correspondante à une inclinaison de la paroi avant du boîtier de distribution qui est attenante à l'ouverture (1).

7. Boîtier de distribution selon l'une des revendications 1 à 6, **caractérisé en ce que** l'élément de maintien (8) peut être installé sur le boîtier de distribution au choix sur un des deux côtés longitudinaux de l'ouverture (1), ou **en ce qu'**il est prévu deux éléments de maintien (8), pouvant être installés sur le boîtier de distribution sur les deux côtés longitudinaux de l'ouverture (1).

8. Boîtier de distribution selon l'une des revendications 1 à 7, **caractérisé en ce que** les moyens destinés à recevoir le support d'inscription (11) comprennent au moins un coudage marginal (10, 14) en forme de U.

9. Boîtier de distribution selon la revendication 8, **caractérisé en ce que** le coudage marginal (14) en forme de U se raccorde par l'intermédiaire d'un coudage supplémentaire (15) à la courbure (13) en forme de U.

10. Boîtier de distribution selon l'une des revendications 1 à 9, **caractérisé en ce qu'**un bourrelet marginal (6) faisant saillie depuis la paroi avant du boîtier de distribution est formé sur le bord de la rainure (4).

11. Boîtier de distribution selon l'une des revendications 1 à 10, **caractérisé en ce que** la rainure (4) et/ou le bourrelet marginal (6) sont dépourvus d'arêtes vives.
